# NOUVEAU FASCICULE DE BREVET EUROPEEN

(11) **EP 0 222 625 B2**
(45) Date de publication et mention de la décision concernant l'opposition: **17.08.1994**
(45) Mention de la délivrance du brevet: 29.05.1991
(21) Numéro de dépôt: 86401533.4
(22) Date de dépôt: 09.07.1986
(51) Int. Cl.: B25B 29/02, B23P 19/06

(54) **Dispositif de tension pour le serrage et le desserrage de boulons ou goujons**
Spannvorrichtung zum Schrauben und Entschrauben von Bolzen oder Stiften
Tensioning device for screwing and unscrewing bolts or studs

(30) Priorité: 04.11.1985 FR 8516293
(43) Date de publication de la demande: 20.05.1987
(73) Titulaire: FRAMATOME, 92400 Courbevoie (FR)
(72) Inventeur: Sevelinge, Gérard, F-71300 - Montceau Les Mines (FR)
(74) Mandataire: Bressand, Georges

(56) Documents cités:
- EP-A- 0 101 268
- DE-A- 875 426
- DE-A- 2 614 654
- DE-A- 2 640 991
- DE-C- 2 902 361
- DE-U- 8 230 533
- FR-A- 2 152 557
- FR-A- 2 168 632
- FR-A- 2 274 997
- FR-A- 2 329 414

## Description

La présente invention a pour objet un dispositif de tension assurant une traction sur des boulons ou des goujons en vue de les maintenir en état de précontrainte de façon à permettre le serrage ou le des- serage de l'écrou dans cette position, par exemple pour la fixation du couvercle d'une cuve.

On sait que, par exemple dans les réacteurs nucléaires, le couvercle est fixé de manière amovible sur la cuve afin de permettre le rechargement périodique en combustible du réacteur et à la faveur de celui-ci une inspection de l'intérieur de la cuve et des éléments situés à l'intérieur de ladite cuve.

A cet effet, le couvercle est fixé sur la cuve du réacteur par des goujons qui sont vissés dans la collerette de la cuve et qui pénètrent dans des trous lisses prévus dans la collerette du couvercle. Ces goujons sont généralement employés en assez grand nombre et relativement rapprochés les uns des autres, si bien que le démontage et le remontage du couvercle nécessitent le dévissage et le vissage de tous ces goujons.

Par ailleurs, pendant les opérations de serrage et de desserrage, on exerce, par un dispositif de tension, une traction sur les goujons afin de les mettre dans un état de précontrainte.

A cet effet, on connaît par le FR-A-2.329.414 un dispositif de tension composé d'un ensemble de tendeurs hydrauliques, fixés et répartis en symétrie polaire sur un anneau porteur. Les tendeurs hydrauliques agissent simultanément et obtiennent la précontrainte désirée sur chaque goujon. Pour obtenir l'effort désiré, chaque tendeur hydraulique comporte plusieurs étages superposés comprenant chacun un piston muni d'un alésage central à travers lequel passe la tige du goujon et présentant une partie basse formant jupe de guidage et une partie haute de plus grand diamètre formant piston. Cette disposition est de plus imposée par l'espace réduit entre les goujons. Chaque étage comporte une cellule munie d'un épaulement entourant ledit piston et sa jupe. Des moyens sont prévus pour introduire un fluide à haute pression au niveau dudit épaulement et l'étage supérieur coopère avec une pièce de traction fixée à l'extrémité du goujon. L'épaisseur des jupes desdits pistons va en augmentant depuis l'étage inférieur jusqu'à l'étage supérieur.

Ce dispositif comporte donc pour chaque tendeur plusieurs étages superposés ce qui entraîne une multiplication des joints d'étanchéité, implique une maintenance délicate et coûteuse et augmentent les risques de fuites. De plus, l'encombrement du dispositif étant dépendant de l'environnement, il en résulte que l'effort nécessaire à l'obtention de la précontrainte se trouve limité par les pressions de fluide moteur habituelles, et si l'effort doit être augmenté, cela n'est possible qu'en augmentant le nombre des pistons superposés.

D'autre part, on connaît dans le FR-A-2.274.997 un dispositif de vissage et dévissage sous tension pour ouvrir ou fermer le couvercle d'une cuve de réacteur nucléaire comportant un anneau porteur muni de vérins de levage qui, sous pression, soumettent les goujons de cuve à une tension. Ce dispositif utilise un couple de deux vérins mono-étage par goujon ce qui augmente de manière importante le nombre de vérins sur l'anneau porteur. Par conséquent, une des difficultés avec ce dispositif est de coordonner le déplacement simultané des pistons de l'ensemble des vérins. Une autre difficulté d'un tel dispositif réside dans le fait que le niveau de la puissance reste limitée par son encombrement.

On connaît dans le document DE-C 29 02 361 un dispositif de tension de goujons destiné à tendre simultanément l'ensemble des goujons. Ce dispositif comprend un vérin comportant un piston annulaire pour une multitude de goujons.

Ce dispositif comprend également un anneau rigide qui fait office de chemise à l'unique piston annulaire.

Le but de l'invention est donc de proposer un dispositif de tension de boulons ou de goujons formé par un corps comportant au moins un vérin muni chacun d'un piston, le dispositif permettant de fonctionner à l'aide d'une pression beaucoup plus basse que celle nécessaire, pour un effort équivalent, avec un dispositif à vérin double mono-étage ou un vérin multiple étagé.

L'invention a donc pour objet un dispositif de mise en tension pour le serrage et le desserrage de boulons ou goujons uniformément répartis sur une circonférence unique et nécessitant une précontrainte, ledit dispositif comportant un anneau rigide muni d'une série de vérins uniformément répartis en symétrie polaire et comprenant chacun un piston, ledit anneau rigide constituant un cylindre pour chaque vérin destiné à recevoir le piston dudit vérin, caractérisé en ce que le piston de chaque vérin est associé à deux boulons ou goujons juxtaposés et comporte deux orifices verticaux parallèles permettant le passage dans chacun desdits pistons du corps des boulons ou goujons juxtaposés pour la mise en tension simultanée desdits boulons ou goujons juxtaposés.

Afin de bien faire comprendre l'invention, on va maintenant décrire, en se référant aux figures jointes en annexe, un mode de réalisation du dispositif suivant l'invention.
La figure 1 est une vue de dessus schématique d'un premier mode de réalisation du dispositif de tension conforme à l'invention.
La figure 2 est une vue en coupe suivant la ligne II-II de la figure 1.
La figure 3 est une vue partielle en coupe suivant l'arc de cercle III-III de la figure 1.
La figure 4 est une vue de dessus en coupe suivant la ligne IV-IV de la figure 3.

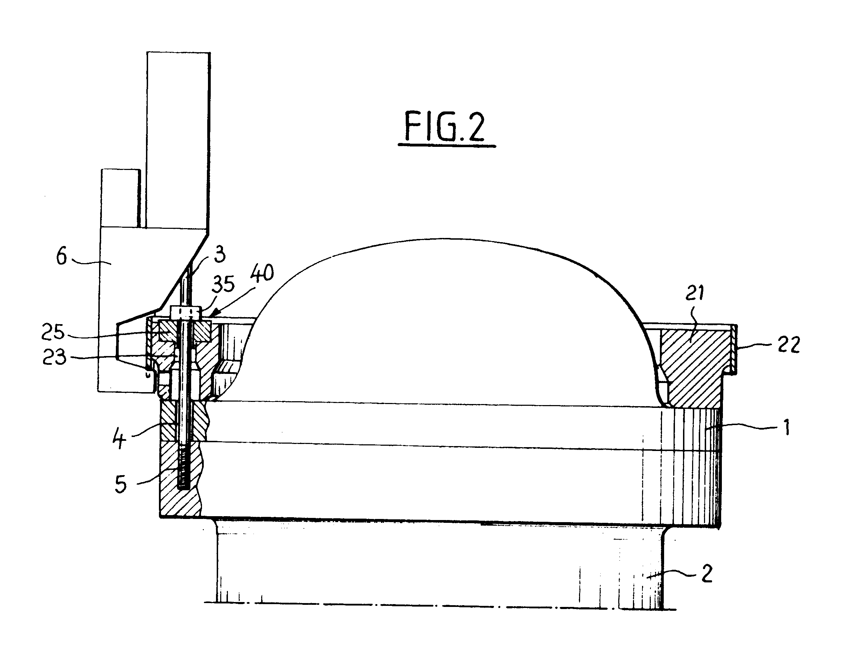

Le dispositif de tension conforme à l'invention est utilisé pour exercer une traction sur des goujons en vue de les maintenir dans l'étatde précontrainte de façon à permettre le serrage ou le déserrage dans cette position des écrous de maintien du couvercle 1 d'une cuve 2 par exemple d'un réacteur nucléaire (Fig. 2). Comme cela est bien connu, le couvercle 1 et la cuve 2 ont une forme de révolution autour d'un axe géométrique vertical. Le couvercle 1 est fixé de manière détachable sur la cuve 2 au moyen de plusieurs goujons 3 avec les écrous associés d'axe vertical qui sont régulièrement répartis à la périphérie du couvercle 1 de la cuve 2.

Chaque goujon passe à travers un trou lisse 4 prévu verticalement dans la collerette du couvercle 1 et est muni, à sa partie inférieure, d'un filetage destiné à être vissé dans un trou taraudé 5 de la collerette de la cuve 2. L'autre extrémité du goujon 3 dépasse à l'extérieur du couvercle 1.

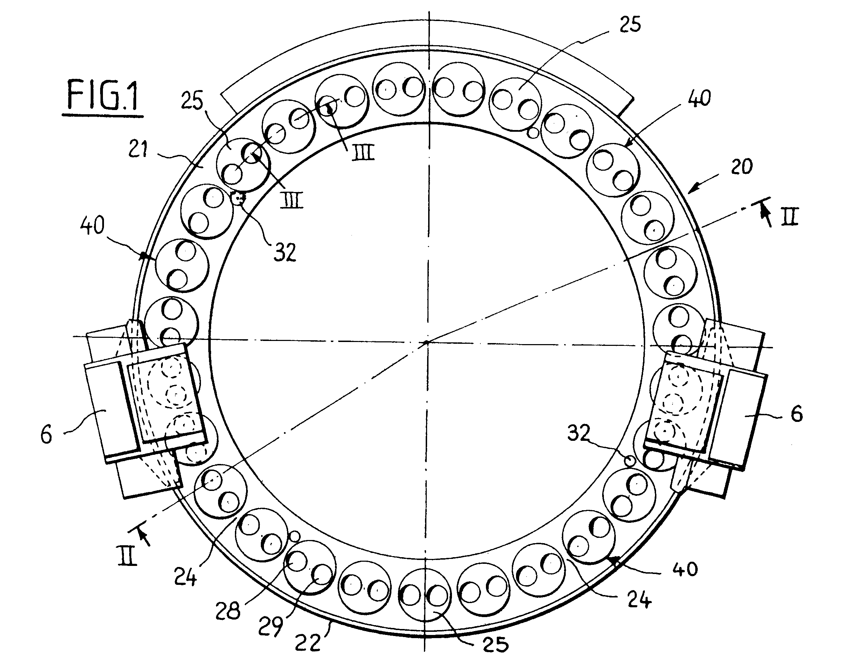

En se reportant aux figures 1 à 4, on va décrire le premier mode de réalisation du dispositif de tension.

Le dispositif de tension comporte un corps, désigné dans son ensemble par la référence 20, constitué par un annneau porteur 21 de structure rigide et ayant une forme de révolution autour d'un axe géométrique vertical correspondant à la forme de révolution du couvercle 1.

L'anneau massif porteur 21 comporte sur sa face périphérique latérale un chemin de roulement 22 pour le positionnement de plusieurs robots de vissage 6 qui peuvent donc se déplacer autour de l'anneau porteur 21 de façon à se placer au-dessus des goujons 3.

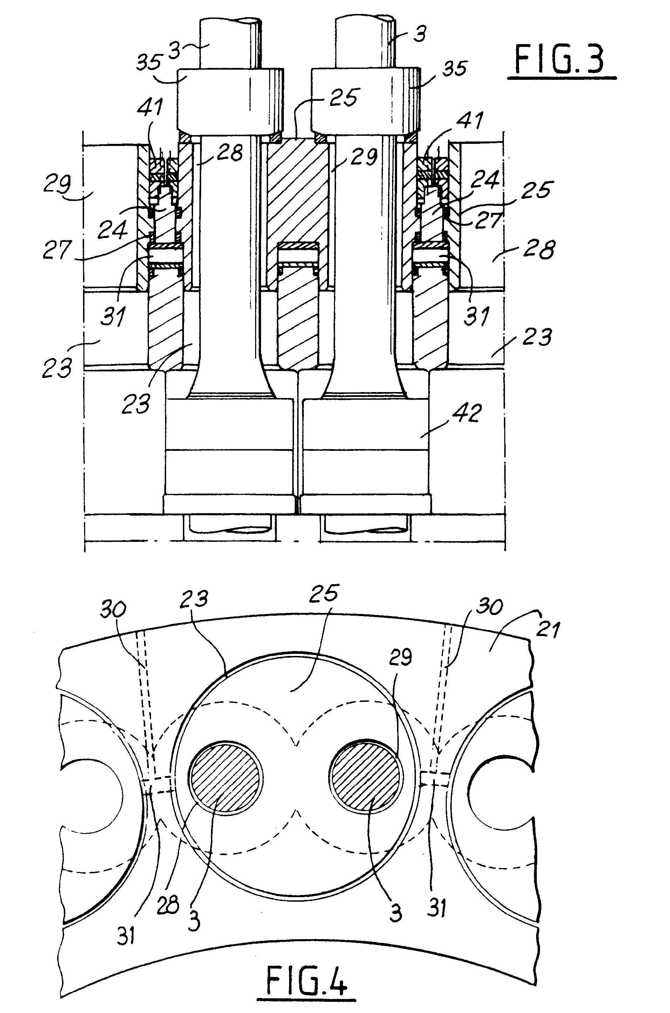

Cet anneau porteur 21 comporte une série de vérins 40 uniformément répartis en symétrie polaire autour de l'axe de révolution dudit anneau. Ces vérins 40 sont constitués chacun par une cavité 23 et par un piston 25 placé à l'intérieur de ladite cavité 23. Les cavités 23 de surface important traversent de part en part l'anneau porteur 21 et ont à leur partie inférieure un diamètre plus grand qu'à leur partie supérieure. De cette façon, les cavités 23 adjacentes comportent entre elles à la partie supérieure un ligament 24 d'épaisseur réduite de l'anneau porteur et sont à la partie inférieure sécantes les unes aux autres comme cela apparaît sur la figure 3.

Chaque piston 25 est percé de deux orifices verticaux parallèles 28 et 29 dont le diamètre est supérieur au diamètre du corps de goujon 3 de façon à permettre un décalage angulaire entre deux goujons d'un même couple. L'entraxe entre les orifices 28 et 29 des différents pistons 25 correspond à l'entraxe entre les goujons 3.

L'étanchéité entre chaque piston 25 et l'anneau porteur 21 est assurée d'une part par des joints d'étanchéité 27 et d'autre part par une bride 41 formée d'un empilement de rondelles et de joints, fixée autour du piston 25 sur l'anneau porteur 21 par des vis ou des petits goujons non représentés.

Les pistons 25 dépassent au-dessus de la face supérieure de l'anneau 21 et ont une certaine latitude d'inclinaison par rapport audit anneau porteur. Cette inclinaison est rendue possible, grâce à une légère différence entre le diamètre extérieur de la partie supérieure des pistons 25 et le diamètre intérieur de la cavité 23 correspondante et également grâce à la configuration des joints d'étanchéité.

On voit donc que l'anneau porteur 21 et les pistons 25 constituent une série de vérins 40 uniformément répartis, dont les cylindres sont formés par ledit anneau porteur 21.

L'alimentation des pistons 25 en fluide moteur peut être effectuée, soit individuellement depuis la périphérie de l'anneau porteur 21, ou soit en série par des petits canaux 30 et 31 prévus dans ledit anneau porteur 21.

Enfin, des vérins hydrauliques 32 (figure 1), par exemple au nombre de quatre, permettant l'auto- soulèvement de l'ensemble du dispositif sont implantés dans l'épaisseur de l'anneau porteur 21.

Le fonctionnement du dispositif ainsi décrit est le suivant :

Tour d'abord, on meten place l'anneau porteur21 muni des différents pistons 25 sur la surface d'appui de la collerette du couvercle 1 en introduisant les extrémités des goujons dans les orifices 28 et 29 de chaque piston 25. Ensuite, on fixe surie corps de chaque goujon 3, au-dessus de l'anneau porteur 21, une pièce de prise 35 formée par exemple par un écrou, un jeu de machoires ou autre organe. Après ces opérations préliminaires, on alimente simultanément les vérins 40 en fluide moteur par les petits canaux 30 et 31. Le piston 25 de chaque vérin se soulève et exerce en même temps sur deux goujons 3 une traction par l'intermédiaire des pièces de prise 35. La mise en tension est simultanée pour l'ensemble des goujons 3.

L'accostage de chaque piston 25 sur les pièces de prise 35 de chaque couple de goujons s'effectue normalement même s'il existe un décalage angulaire entre deux goujons d'un couple ou si un faible décalage d'altitude des pièces de prise s'est produit, et ceci grâce au jeu existant entre les goujons et le piston, et à la latitude d'inclinaison axiale dudit piston.

Le tensionnement des goujons ainsi réalisé, qu'il soit fait au montage ou au démontage, peut être suivi des différentes opérations de vissage ou de dévissage des écrous 42 de maintien du couvercle logés dans la partie inférieure des cavités 23.

Ce dispositif de tension pour le serrage ou le desserrage de boulons ou goujons, constitué soit par un anneau porteur rigide peut être utilisé, selon les besoins, à basse et à moyenne pressions. De plus, les vérins ont un rapport course-diamètre très petit.

Par ailleurs, il faut remarquer la surface importante des vérins, ce qui permet l'utilisation d'une pression de fluide moteur ne nécessitant pas un niveau de qualité d'usinage élevé et également des tolérances de fabrication étroites.

Le fait que chaque piston de vérin ait un diamètre tel que sa section de travail contienne l'encombrement de deux goujons permet de fonctionner à l'aide d'une pression beaucoup plus basse que celle nécessaire, pour un effort équivalent, avec un dispositif des types vérin double mono-étage, et vérin multiple éta- g^{é.}

On voit donc que l'utilisation de pistons de grands diamètres autorise, entre autres, l'emploi d'un fluide moteur à pression peu élevée et permet de diminuer le nombre de vérins pour la mise en tension simultanée de l'ensemble des goujons, et par conséquent le nombre de joints d'étanchéité qui sont des zones à risque de fuite. Enfin, comme nous l'avons indiqué précédemment, il permet de prendre en compte les désaxages des goujons qu'ils soient d'origine ou consécutifs au fonctionnement.

Le dispositif suivant l'invention s'applique non seulement aux centrales nucléaires comportant un réacteur à eau sous pression, mais à d'autres secteurs de l'industrie nucléaire, aux installations pétrolières et pétrochimiques, aux installations minières, ou encore pour la fermeture de turbines, vannes hydrauliques, conduites sous pression ou corps de vannes. De façon générale, le dispositif suivant l'invention s'applique dans le cadre de nombreuses installations industrielles mettant en oeuvre des éléments qui nécessitent une précontrainte.

## Revendications

1. Dispositif de mise en tension pour le serrage et le desserrage de boulons ou goujons (3) uniformément répartis sur une circonférence unique et nécessitant une précontrainte, ledit dispositif comportant un anneau rigide (21) muni d'une série de vérins (40) uniformément répartis en symétrie polaire et comprenant chacun un piston (25), ledit anneau rigide (21) constituant un cylindre pour chaque vérin (40), destiné à recevoir le piston (25) dudit vérin, caractérisé en ce que le piston de chaque vérin (40) est associé à deux boulons ou goujons (3) juxtaposés et comporte deux orifices verticaux parallèles (28, 29) permettant le passage dans chacun desdits pistons du corps des boulons ou goujons (3) juxtaposés pour la mise en tension simultanée desdits boulons ou goujons (3) juxtaposés.

2. Dispositif de mise en tension selon la revendication 1, caractérisé en ce que chaque piston (25) est placé dans une cavité (23) usinée directement à l'intérieur dudit anneau rigide (21).

3. Dispositif de mise en tension selon les revendications 1 et 2, caractérisé en ce que le diamètre de la partie supérieure de chaque piston (25) est légèrement inférieur au diamètre de la partie supérieure de la cavité (23) correspondante pour autoriser une légère inclinaison dudit piston dans sa cavité.

4. Dispositif de mise en tension selon la revendication 1, caractérisé en ce que lesdits orifices verticaux parallèles (28, 29) ont un diamètre supérieur au diamètre dudit corps.

5. Dispositif de tension selon la revendication 4, caractérisé en ce que l'entraxe desdits orifices (28, 29) des pistons (25) de chaque vérin (40) correspond à l'entraxe des boulons ou goujons (3).

## Patentansprüche

1. Spannvorrichtung zum Schrauben und Lösen von Bolzen oder Stiften (3), die gleichmäßig auf einem einzigen Umfang verteilt sind und eine Vorspannung benötigen, wobei die Vorrichtung einen steifen Ring (21) mit einer Reihe von gleichmäßig in Polarsymmetrie verteilten Stellvorrichtungen (40) mit je einem Kolben (25) aufweist, wobei der steife Ring (21) einen Zylinder für jede Stellvorrichtung (40) bildet, um den Kolben (25) dieser Stellvorrichtung aufzunehmen,
dadurch gekennzeichnet,
daß der Kolben jeder Stellvorrichtung (40) mit zwei nebeneinandergesetzten Bolzen oder Stiften (3) verbunden ist und zwei senkrechte parallele Öffnungen (28, 29) aufweist, die den Durchgang in jeden dieser Kolben des Schaftes von nebeneinandergesetzten Bolzen oder Stiften (3) für das gleichzeitige Spannen dieser nebeneinandergesetzten Bolzen oder Stifte (3) zulassen.

2. Spannvorrichtung nach Anspruch 1,
dadurch gekennzeichnet,
daß jeder Kolben (25) in eine Aussparung (23) gesetzt ist, die direkt im Innern des steifen Ringes (21) eingearbeitet ist.

3. Spannvorrichtung nach Anspruch 1 und 2,
dadurch gekennzeichnet,
daß der Durchmesser des oberen Abschnitts jedes Kolbens (25) etwas geringer ist gegenüber dem Durchmesser des oberen Abschnitts der entsprechenden Aussparung (23), um eine leichte Schrägstellung des Kolbens in seiner Aussparung zuzulassen.

4. Spannvorrichtung nach Anspruch 1,
dadurch gekennzeichnet,
daß die senkrechten parallelen Öffnungen (28, 29) einen gegenüber dem Durchmesser des Schaftes größeren Durchmesser aufweisen.

5. Spannvorrichtung nach Anspruch 4,
dadurch gekennzeichnet,
daß der Mittenabstand der Öffnungen (28, 29) der Kolben (25) jeder Stellvorrichtung (40) dem Mittenabstand der Bolzen oder Stifte (3) entspricht.

## Claims

1. Tensioning device for screwing and unscrewing bolts or studs (3) which are uniformly distributed over a single circumference and require prestressing, said device comprising a rigid ring (21) provided with a series of jacks (40), uniformly distributed in polar symmetry and each comprising a piston (25), said rigid ring (21) constituting a cylinder for each jack (40), for receiving the piston (25) of said jack, characterised in that the piston of each jack (40) is associated with two juxtaposed bolts or studs (3) and comprises two parallel vertical openings (28,29) enabling the bodies of the juxtaposed bolts or studs (3) to pass through each of the pistons, for the simultaneous tensioning of said juxtaposed bolts or studs (3).

2. Tensioning device according to claim 1, characterised in that each piston (25) is placed in a recess (23) machined directly inside the rigid ring (21).

3. Tensioning device according to claims 1 and 2, characterised in that the diameter of the upper part of each piston (25) is slightly smaller than the diameter of the upper part of the corresponding recess (23), in order to enable the piston to tilt slightly in its recess.

4. Tensioning device according to claim 1, characterised in that the parallel vertical openings (28,29) have a diameter larger than the diameter of said body.

5. Tensioning device according to claim 4, characterised in that the difference between the centers of the openings (28,29) of the pistons (25) of each jack (40) corresponds to the distance between the centers of the bolts or studs (3).
